# EUROPEAN PATENT SPECIFICATION

(11) **EP 2 128 545 B1**
(45) Date of publication and mention of the grant of the patent: **09.10.2013**
(21) Application number: 08703803.0
(22) Date of filing: 24.01.2008
(51) Int. Cl.: F25D 29/00, F25B 27/00, B60P 3/20, B60H 1/32

(54) **REFRIGERATION DEVICE FOR REFRIGERATION VEHICLE**
KÜHLVORRICHTUNG FÜR KÜHLFAHRZEUG
DISPOSITIF DE RÉFRIGÉRATION POUR UN VÉHICULE DE RÉFRIGÉRATION

(30) Priority: 26.01.2007 JP 2007016342
(43) Date of publication of application: 02.12.2009
(73) Proprietor: Daikin Industries, Ltd., Osaka 530-8323 (JP)
(72) Inventor: FUJIMOTO, Yuji, Osaka-shi Osaka 530-8323 (JP); NISHIHAMA, Yukio, Osaka-shi Osaka 530-8323 (JP); KITANO, Shigeichi, Sakai-shi Osaka 591-8511 (JP); SAWADA, Yuzou, Settsu-shi Osaka 566-8585 (JP); MATSUNO, Sumikazu, Kusatsu-shi Shiga 525-8526 (JP)
(74) Representative: HOFFMANN EITLE
(86) International application number: PCT/JP2008/050975
(87) International publication number: WO 2008/090949

(56) References cited:
- WO-A1-2004/108463
- JP-A- 05 038 933
- JP-A- 08 105 666
- JP-A- 2000 257 553
- JP-A- 2001 026 215
- JP-A- 2002 081 821
- JP-A- 2006 234 198
- US-A1- 2005 109 051
- US-B1- 6 763 668

## Description

### TECHNICAL FIELD

The present invention relates to refrigeration units for refrigerated vehicles, and more particularly relates to a refrigeration unit configured to drive a compressor directly by a refrigerating engine.

### BACKGROUND ART

As described in Japanese Unexamined Patent Application Publication No. 2006-234198 refrigerated vehicles configured so that a trailer forming a refrigerator is towed by a tractor have conventionally been equipped with a refrigeration unit for cooling the interior of a refrigerator. A refrigerated vehicle of this type has been equipped with a sub-engine forming a refrigerating engine separate from a driving engine. For the refrigeration unit, a compressor is coupled to the sub-engine, and a refrigeration circuit is connected to the compressor. The compressor is driven by the sub-engine, and an evaporator of the refrigeration circuit evaporates refrigerant, resulting in cooling of the interior of the refrigerator.

US 2005/109051 A1 discloses a motor vehicle air-conditioning system having standstill air-conditioning, but fails to disclose the features in the characterizing portion of Claim 1. WO 2004/108463 A1, JP 5-38933, and US 6,763,668 B1 are further prior art.

### DISCLOSURE OF INVENTION

### Problems that the Invention is to Solve

For conventional refrigeration units for refrigerated vehicles, their refrigeration capacities are generally merely controlled in two stages. Hence, the conventional refrigeration units have not adapted to fluctuations in their refrigeration loads and thus have been inefficient.

More particularly, the operational capacity of the compressor has been only changed in two stages by controlling the rotational speed of the sub-engine in two stages. Consequently, even with a linear change in the refrigeration load, the refrigeration capacity has only changed in two stages. Therefore, the conventional refrigeration units have had a region providing an unnecessary capacity and thus have exhibited poor refrigeration efficiency.

The present invention has been made in view of the foregoing point and an object thereof is to improve the refrigeration efficiency of a refrigeration unit by efficiently providing the refrigeration capacity thereof.

### Means of Solving the Problems

A first aspect of the invention is directed to a refrigerated vehicle refrigeration unit having the features of Claim 1.

In a second aspect of the invention, in the refrigeration unit according to the first aspect of the invention, the compressor (40) may include a plurality of compressors (40), and the plurality of compressors (40) may be connected in parallel and connected to the refrigeration circuit (70).

In a second aspect of the invention, the refrigeration unit according to any one of the first through second aspects of the invention may further include an auxiliary motor (60) disconnectably connected to the compressor (40) and driven by electric power of an external power source.

In a fourth aspect of the invention, in the refrigeration unit according to the third aspect of the invention, the electric generator (50) may be selectively connectable to an external power source and the battery (51).

### <Operation>

According to the first aspect of the invention, the compressor (40) is driven by the torque of the refrigerating engine (30), and the refrigeration circuit (70) performs a cooling operation, thereby cooling the interior of the refrigerator (13). Meanwhile, for example, if the refrigeration load is small, the refrigerating engine (30) is stopped while the electric power of the battery (51) allows the electric generator (50) to rotate. This rotation drives the compressor (40). In this way, the cooling operation of the refrigeration circuit (70) is achieved.

In the second aspect of the invention, the number of the plurality of compressors (40) is controlled, thereby controlling the refrigeration capacity.

In the third aspect of the invention, if the refrigerating engine (30) cannot be driven, the compressor (40) is driven by the auxiliary motor (60). In this way, the cooling operation of the refrigeration circuit (70) is achieved.

In the fourth aspect of the invention, if the refrigerating engine (30) cannot be driven, the electric generator (50) drives the compressor (40). In this way, the cooling operation of the refrigeration circuit (70) is achieved.

### ADVANTAGES OF THE INVENTION

According to the above-described present invention, fluctuations in the rotational speed of the refrigerating engine (30)are linearly controlled so that the refrigeration capacity grows or declines in response to the refrigeration load Therefore, an unnecessary refrigeration capacity is not provided, for example, as compared with the conventional case in which the rotational speed of a refrigerating engine is controlled in two stages. This improves cooling efficiency, resulting in energy savings.

Furthermore, as compared with a unit that is volume-controlled by driving an electric generator using a refrigerating engine (30) and driving a motor of a compressor (40) using the power of this electric generator as in the past, losses arising from motor efficiency, power losses from the electric generator to the motor, or other losses are not caused. This improves the efficiency, of the refrigeration unit.

According to the invention, since the electric generator (50) and the battery (51) are provided, the refrigerating engine (30) is driven at a constant rotational speed. Meanwhile, if the refrigeration load is reduced, the refrigerating engine (30) is stopped, the electric power stored in the battery (51) allows the electric generator (50) to develop torque, and the rotation of the electric generator (50) drives the compressor (40). Consequently, the power of the refrigerating engine (30) and the electric power of the battery (51) can be selectively used. This can provide the refrigeration capacity matched with the refrigeration load while permitting energy savings, resulting in improved efficiency.

Moreover, if the refrigeration load is small, the rotation of the refrigerating engine (30) is stopped, and only the fan motor (7a) is driven by the electric power stored in the battery (51), thereby maintaining the indoor temperature only by an air blowing operation.
As a result, the operating time of the refrigerating engine (30) can be reduced.

According to the second aspect of the invention, since the refrigeration unit is equipped with the plurality of compressors (40), the number of operating one or ones of the compressors (40) is controlled, thereby extensively adjusting the refrigeration capacity in response to the rotational speed range of the refrigerating engine (30). This adjustment allows the refrigerationcapacity to adapt to extensive refrigeration loads.

According to the third aspect of the invention, since the auxiliary motor (60) is provided, an operation of the refrigeration circuit (70) can be continued, for example, also during the stop period of the sub-engine (30). This can increase the range of use for the refrigeration unit.

According to the fourth aspect of the invention, the electric generator (50) is selectively connectable to an external power source and the battery (51). Therefore, the electric generator (50) can double as a motor. As a result, the number of components can be reduced.

### BRIEF DESCRIPTION OF DRAWINGS

FIG. 1 is a side view showing a refrigerated vehicle.
FIG. 2 is a block diagram showing the configuration of a refrigeration unit.

### Description of Characters

- 10: refrigerated vehicleJJ
- 13: trailer body (refrigerator)
- 20: refrigeration unit
- 30: sub-engine (refrigerating engine)
- 40: compressor
- 50: electric generator
- 51: battery
- 60: standby motor (auxiliary motor)
- 70: refrigeration circuit
- 7a: fan motor

### BEST MODE FOR CARRYING OUT THE INVENTION

Hereinafter, embodiments of the present invention will be described in detail with reference to the drawings.

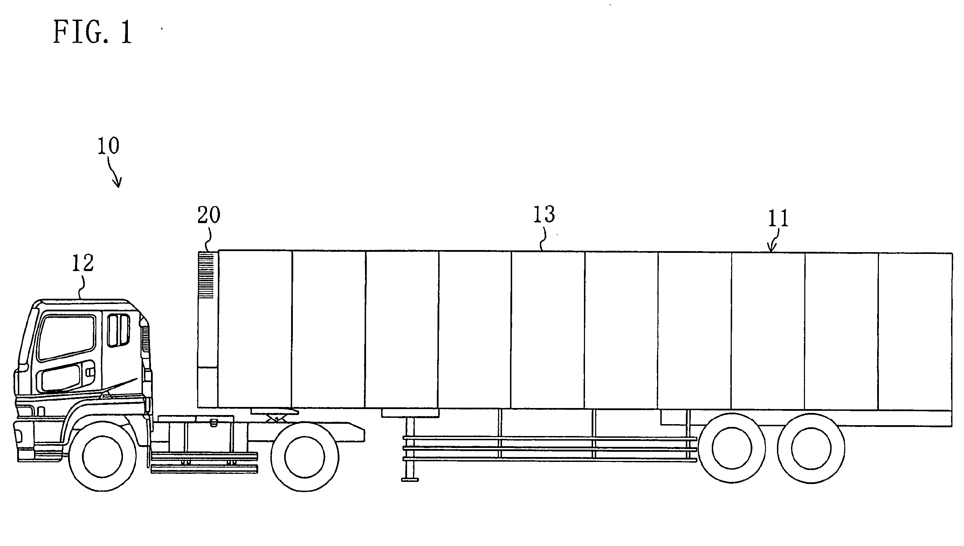

As shown in FIG. 1, a refrigerated vehicle (10) of this embodiment includes a trailer (11) and a tractor (12) for towing the trailer (11) and is used to transport refrigerated food products, such as frozen food products or perishable food products, by land.

The trailer (11) includes a trailer body (13), i.e., a refrigerator, and a refrigeration unit (20) for a trailer, i.e., a refrigeration unit for a refrigerated vehicle. The refrigeration unit (20) is placed on the front end surface of the trailer body (13), i.e., the surface thereof near the tractor (12).

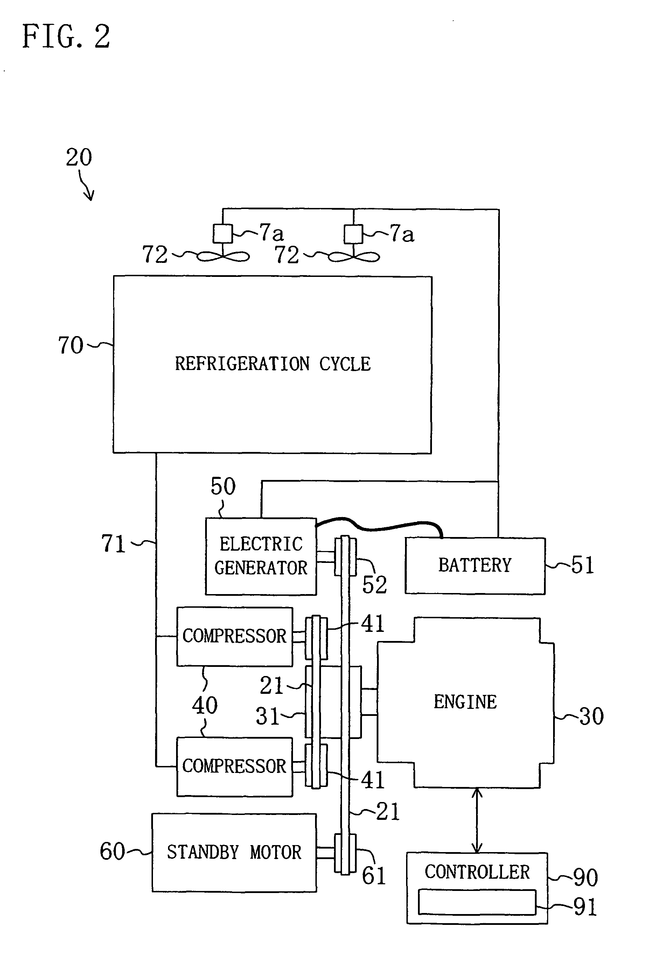

As shown in FIG. 2, the refrigeration unit (20) includes a sub-engine (30) forming a refrigerating engine, two compressors (40), a refrigeration circuit (70), an electric generator (50), a battery (51), and a standby motor (60) forming an auxiliary motor.

The sub-engine (30) is provided separately from a driving engine and configured as an exclusive engine for driving the refrigeration unit (20) so that a belt (21) is wound around a pulley (31) fitted onto a drive shaft of the sub-engine (30).

The compressors (40) are scroll compressors and configured as so-called open compressors so that pulleys (41) fitted onto respective drive shafts of the compressors (40) are coupled through the belt (21) to the pulley (31) of the sub-engine (30). In other words, the compressors (40) are mechanically coupled to the sub-engine (30) and driven by the torque of the sub-engine (30). Although not shown, the pulleys (41) or other components for the compressors (40) are provided with disconnecting mechanisms, such as clutches. Thus, the compressors (40) are disconnectably coupled to the sub-engine (30).

A refrigerant pipe (71) for the refrigeration circuit (70) operable in a vapor compression refrigeration cycle is coupled to the compressors (40). The two compressors (40) are connected in parallel to the refrigeration circuit (70).

Although not shown, the refrigeration circuit (70) includes a condenser, an expansion mechanism, and an evaporator. Refrigerant circulates in the following manner: Refrigerant discharged from the compressors (40) is condensed by the condenser, decompressed by the expansion mechanism, then evaporated by the evaporator, and returned to the compressors (40). The indoor air of the trailer body (13) is cooled by the evaporator, thereby cooling the interior of the trailer body (13).

Furthermore, the refrigeration circuit (70) includes fans (72) for the condenser and evaporator. Fan motors (7a) are coupled to the fans (72).

For the electric generator (50), a pulley (52) fitted onto a drive shaft of the electric generator (50) is coupled through another belt (21) to the pulley (31) of the sub-engine (30). The electric generator (50) generates electric power by the torque of the sub-engine (30). Although not shown, the pulley (52) or any other component for the electric generator (50) is provided with a disconnecting mechanism, such as a clutch. Thus, the electric generator (50) is disconnectably coupled to the sub-engine (30).

The battery (51) is connected to the electric generator (50) to store the power generated by the electric generator (50).

The electric generator (50) is electrically wired to the fan motors (7a) so that the fan motors (7a) are driven by the electric power generated by the electric generator (50). Furthermore, the fan motors (7a) are electrically wired also to the battery (51) and selectively connected to the electric generator (50) and the battery (51) so as to be driven by at least one of the electric power from the electric generator (50) and the electric power from the battery (51).

The fan motors (7a) are formed of alternating motors. The direct-current power supplied from the electric generator (50) and the battery (51) is converted into alternating-current power, and then the resultant alternating-current power is supplied to the fan motors (7a).

Furthermore, the electric generator (50) and the battery (51) feed power also to control devices.

The standby motor (60) is connectable to an external power source and permits a freezing operation of the refrigeration circuit (70) also during the period during which the refrigerated vehicle (10) is parked in a garage or the like. For the standby motor (60), a pulley (61) fitted onto a drive shaft of the standby motor (60) is coupled through the associated belt (21) to the pulley (31) of the sub-engine (30) so as to be coupled to the compressors (40). The pulley (61) or any other component for the standby motor (60) is provided with a disconnecting mechanism, such as a clutch. Thus, the standby motor (60) is disconnectably coupled to the compressors (40). In other words, the standby motor (60) drives the compressors (40) during the stop period of the sub-engine (30) and is formed of a compact motor capable of rotating at high speed.

A controller (90) is connected to the sub-engine (30) and provided with a rotational speed control unit (91) forming a rotational speed controller for the sub-engine (30). The rotational speed control unit (91) controls the rotational speed of the sub-engine (30). In other words, the rotational speed controller is configured, for example, to control a throttle motor for driving a throttle valve of the sub-engine (30).

Furthermore, the rotational speed control unit (91) linearly controls fluctuations in the rotational speed of the sub-engine (30) such that the refrigeration capacity of the refrigeration unit grows or declines in response to the refrigeration load. More particularly, the rotational speed control unit (91) linearly increases the rotational speed of the sub-engine (30) on the basis of, for example, the temperature differential between an indoor temperature and a desired temperature in the following manner: With an increase in the temperature differential and an associated increase in the refrigeration load, the refrigeration capacity grows. Conversely, the rotational speed control unit (91) linearly decreases the rotational speed of the sub-engine (30), for example, in the following manner: With a decrease in the temperature differential between the indoor temperature and the desired temperature and an associated decrease in the refrigeration load, the refrigeration capacity declines.

### -Operational Behavior-

Next, a description will be given of the behavior of the above-described refrigeration unit (20) for the refrigerated vehicle (10) during a cooling operation thereof.

First, when the sub-engine (30) is driven separately from the driving engine, the torque of the sub-engine (30) is transmitted through the associated belt (21) to the compressors (40). Thus, the rotation of the sub-engine (30) permits the rotational drive of the two compressors (40). The rotational drive of the compressors (40) allows the compressors (40) to compress refrigerant in the refrigeration circuit (70). The refrigerant circulates in the following manner: The refrigerant discharged from the compressors (40) is condensed by the condenser, decompressed by the expansion mechanism, then evaporated by the evaporator, and returned to the compressors (40). The indoor air of the trailer body (13) is cooled by the evaporator, thereby cooling the interior of the trailer body (13).

Meanwhile, although not shown, the temperature of the indoor air of the trailer body (13) is sensed, thereby detecting the refrigeration load on the basis of the temperature differential between the indoor temperature and the desired temperature. When the temperature differential between the indoor temperature and the desired temperature becomes greater and the refrigeration load accordingly increases, the rotational speed control unit (91) linearly increases the rotational speed of the sub-engine (30) so that, with the increase in the temperature differential, the refrigeration capacity grows. On the other hand, when the temperature differential between the indoor temperature and the desired temperature becomes smaller and the refrigeration load accordingly decreases, the rotational speed control unit (91) linearly decreases the rotational speed of the sub-engine (30) so that, with the decrease in the temperature differential, the refrigeration capacity declines.

Consequently, the cooling capacity grows in response to the increase in the refrigeration load, resulting in reliable cooling of the interior of the trailer body (13).

Furthermore, the refrigeration capacity is controlled in the following manner: If the refrigeration load is small, only one of the two compressors (40) is driven, and if the refrigeration load is large, both of the two compressors (40) are driven.

Meanwhile, the rotation of the sub-engine (30) allows the electric generator (50) to generate electric power. The electric power of the electric generator (50) is supplied to the fan motors (7a), thereby driving the fans (72). The generated electric power of the electric generator (50) is fed also to control devices, such as the controller (90), and fed also to the battery (51) so as to be stored therein.

On condition that a freezing operation of the refrigeration circuit (70) is performed also during the period during which the refrigerated vehicle (10) is parked in a garage or the like, the standby motor (60) is connected to an external power source. The drive of the standby motor (60) allows the torque of the standby motor (60) to drive the compressors (40). As a result, the refrigeration circuit (70) continues its cooling operation. In this case, while the coupling between the compressors (40) and the sub-engine (30) is interrupted, the standby motor (60) is coupled to the compressors (40).

### -Advantages of Embodiment-

As described above, according to this embodiment, fluctuations in the rotational speed of the sub-engine (30) are linearly controlled so that the refrigeration capacity grows or declines in response to the refrigeration load. Therefore, an unnecessary refrigeration capacity is not provided, for example, as compared with the conventional case in which the rotational speed of a sub-engine is controlled in two stages. This improves cooling efficiency, resulting in energy savings.

Furthermore, as compared with a unit that is volume-controlled by driving an electric generator using a sub-engine (30) and driving a motor of a compressor (40) using the power of this electric generator as in the past, losses arising from motor efficiency, power losses from the electric generator to the motor, or other losses are not caused. This improves the efficiency of the refrigeration unit.

Moreover, since the refrigeration unit is equipped with the two compressors (40), the number of operating one or ones of the compressors (40) is controlled, thereby extensively adjusting the refrigeration capacity in response to the rotational speed range of the sub-engine (30). This adjustment allows the refrigeration capacity to adapt to extensive refrigeration loads.

In addition, the electric power generated by the electric generator (50) drives the fan motors (7a). Therefore, the fan motors (7a) can form alternating motors, resulting in improved efficiency.

Furthermore, since the standby motor (60) is provided, an operation of the refrigeration circuit (70) can be continued, for example, also during the stop period of the sub-engine (30). This can increase the range of use for the refrigeration unit.

### <Other Embodiments>

The above embodiment of the present invention may be configured as follows.

In the above embodiment, the compressors (40) are always driven during the cooling operation. However, if the refrigeration load is small, the rotation of the sub-engine (30) may be stopped, and only the fan motors (7a) may be driven by the electric power stored in the battery (51), thereby maintaining the indoor temperature only by an air blowing operation. As a result, the operating time of the sub-engine (30) can be reduced.

In a low rotational speed range of the sub-engine (30), the sub-engine (30) may be stopped, the electric power stored in the battery (51) may allow the electric generator (50) to develop torque, and the rotation of the electric generator (50) may drive the compressors (40). In other words, the electric generator (50) may double as a motor to drive the compressors (40). In this case, coupling between the compressors (40) and the sub-engine (30) is interrupted. Consequently, the sub-engine (30) can be used in its high-efficiency range, resulting in further energy savings.

Although in the above embodiment the rotational speed control unit (91) is provided, the rotational speed control unit (91) may be omitted. More particularly, the sub-engine (30) may be driven at a constant rotational speed. Meanwhile, according to the invention, if the refrigeration load is reduced, the sub-engine (30) is stopped, the electric power stored in the battery (51) allows the electric generator (50) to develop torque, and the rotation of the electric generator (50) drives the compressors (40). In this case, the power of the sub-engine (30) and the electric power of the battery (51) can be selectively used. This provides the refrigeration capacity matched with the refrigeration load while permitting energy savings, resulting in improved efficiency.

Although in the above embodiment the electric generator (50) and the standby motor (60) are both provided, the electric generator (50) may double as the standby motor (60). In other words, the electric generator (50) may be selectively connectable to an external power source and the battery (51). As a result, the number of components can be reduced.

Although in the above embodiment the two compressors (40) are provided, a single compressor (40) may be provided in the present invention. Alternatively, three or more compressors (40) may be provided.

Although in the above embodiment the standby motor (60) is provided, it does not always need to be provided in the first, second and other aspects of the invention. In other words, the standby motor (60) may be provided as an optional item.

Although in the above embodiment the refrigerated vehicle (10) having a trailer was described, the refrigerated vehicle (10) may be a refrigerated truck or any other refrigerated vehicle.

The above embodiments are mere essentially preferable examples, and are not intended to limit any scopes of the present invention, applicable subjects, and usage.

### INDUSTRIAL APPLICABILITY

As described above, the present invention is useful for refrigeration units for refrigerated vehicles for cooling, for example, the indoor air in the interior of a trailer body.

## Claims

1. A refrigerated vehicle refrigeration unit for cooling the interior of a refrigerator (13) of a refrigerated vehicle (10), the refrigeration unit including:
a refrigerating engine (30);
a compressor (40) arranged to be driven by the refrigerating engine (30);
and a refrigeration circuit (70) connected to the compressor (40) and operable in a vapor compression refrigeration cycle, wherein
the refrigerated vehicle refrigeration unit comprises a battery (51) for storing electric power; and an electric generator (50) for generating electric power by the rotational drive of the refrigerating engine (30) to store the generated electric power in the battery (51), and
the refrigerating engine (30) is disconnectably connected to the compressor (40), and the electric generator (50) is connected to the compressor (40),
**characterized in that** the refrigerated vehicle refrigeration unit is arranged such that, when a refrigeration load is large, the compressor (40) is driven by the refrigerating engine (30) and rotation of the refrigerating engine (30) allows the electric generator (50) to generate electric power, and when the refrigeration load is small, the refrigerating engine (30) is stopped, the electric power stored in the battery (51) allows the electric generator (50) to develop torque, and the rotation of the electric generator (50) drives the compressor (40).

2. The refrigerated vehicle refrigeration unit of claim 1, wherein
the compressor (40) comprises a plurality of compressors (40), and the plurality of compressors (40) are connected in parallel and connected to the refrigeration circuit (70).

3. The refrigerated vehicle refrigeration unit of claim 1 or 2 further comprising
an auxiliary motor (60) disconnectably connected to the compressor (40) and driven by electric power of an external power source.

4. The refrigerated vehicle refrigeration unit of claim 3, wherein
the electric generator (50) is selectively connectable to an external power source and the battery (51).

## Patentansprüche

1. Kühlfahrzeug-Kühleinheit zum Kühlen des Inneren eines Kühlgeräts (13) eines Kühlfahrzeugs (10), wobei die Kühleinheit aufweist:
eine Kältemaschine (30);
einen Verdichter (40), der angeordnet ist, um durch die Kältemaschine (30) angetrieben zu werden; und
einen Kühlkreislauf (70), der mit dem Verdichter (40) verbunden ist und in einem Dampfverdichtungskältekreislauf betreibbar ist, wobei
die Kühlfahrzeug-Kühleinheit eine Batterie (51) zum Speichern von elektrischer Energie und einen elektrischen Generator (50) zum Erzeugen von elektrischer Energie durch die Drehbewegung der Kältemaschine (30) aufweist, um die erzeugte elektrische Energie in der Batterie (51) zu speichern, und
die Kältemaschine (30) trennbar mit dem Verdichter (40) verbunden ist, und der elektrische Generator (50) mit dem Verdichter (40) verbunden ist, **dadurch gekennzeichnet, dass**
die Kühlfahrzeug-Kühleinheit so angeordnet ist, dass, wenn eine Kühllast groß ist, der Verdichter (40) durch die Kältemaschine (30) angetrieben wird und die Rotation der Kältemaschine (30) es ermöglicht, dass der elektrische Generator (50) elektrische Energie erzeugt, und, wenn die Kühllast klein ist, die Kältemaschine (30) gestoppt wird und die elektrische Energie, welche in der Batterie (51) gespeichert ist, es ermöglicht, dass der elektrische Generator (50) Drehmoment entwickelt und die Rotation des elektrischen Generators (50) den Verdichter (40) antreibt.

2. Kühlfahrzeug-Kühleinheit nach Anspruch 1, bei welcher
der Verdichter (40) eine Vielzahl von Verdichtern (40) aufweist, und die Vielzahl von Verdichtern (40) parallel geschaltet sind und mit dem Kühlkreislauf (70) verbunden sind.

3. Kühlfahrzeug-Kühleinheit nach Anspruch 1 oder 2 mit ferner
einem Hilfsmotor (60), welcher trennbar mit dem Verdichter (40) verbunden ist und durch elektrische Energie einer externen Energiequelle angetrieben wird.

4. Kühlfahrzeug-Kühleinheit nach Anspruch 3, bei welcher
der elektrische Generator (50) selektiv mit einer externen Energiequelle und der Batterie (51) verbindbar ist.

## Revendications

1. Unité de réfrigération pour véhicule frigorifique destiné à refroidir l'intérieur d'un réfrigérateur (13) d'un véhicule frigorifique (10), l'unité de réfrigération comportant :
un moteur de réfrigération (30) ;
un compresseur (40) agencé pour être entraîné par le moteur de réfrigération (30) ;
et un circuit de réfrigération (70) relié au compresseur (40) et pouvant fonctionner dans un cycle de réfrigération à compression de vapeur, où
l'unité de réfrigération pour véhicule frigorifique comprend une batterie (51) pour stocker de l'énergie électrique ; et un générateur électrique (50) pour générer de l'énergie électrique par l'entraînement rotatif du moteur de réfrigération (30) pour stocker l'énergie électrique générée dans la pile (51), et
le moteur de réfrigération (30) est relié au compresseur (40) de manière détachable, et le générateur électrique (50) est relié au compresseur (40),
**caractérisée en ce que** l'unité de réfrigération pour véhicule frigorifique est agencée de sorte que, lorsqu'une charge de réfrigération est grande, le compresseur (40) soit entraîné par le moteur de réfrigération (30) et la rotation du moteur de réfrigération (30) permette au générateur électrique (50) de générer de l'énergie électrique, et lorsque la charge de réfrigération est petite, le moteur de réfrigération (30) soit arrêté, l'énergie électrique stockée dans la batterie (51) permette au générateur électrique (50) de développer un couple, et la rotation du générateur électrique (50) entraîne le compresseur (40).

2. Unité de réfrigération pour véhicule frigorifique de la revendication 1, dans laquelle
le compresseur (40) comprend une pluralité de compresseurs (40), et la pluralité de compresseurs (40) sont reliés en parallèle et reliés au circuit de réfrigération (70).

3. Unité de réfrigération pour véhicule frigorifique de la revendication 1 ou 2 comprenant en outre
un moteur auxiliaire (60) relié de manière détachable au compresseur (40) et entraîné par l'énergie électrique d'une source d'alimentation externe.

4. Unité de réfrigération pour véhicule frigorifique de la revendication 3, dans laquelle
le générateur électrique (50) peut être relié de manière sélective à une source d'alimentation externe et à la batterie (51).
